# EUROPÄISCHE PATENTSCHRIFT

(11) **EP 1 701 155 B1**
(45) Veröffentlichungstag und Bekanntmachung des Hinweises auf die Patenterteilung: **08.10.2008**
(21) Anmeldenummer: 05005352.9
(22) Anmeldetag: 11.03.2005
(51) Int. Cl.: G01N 27/416, G01N 31/22, B01D 53/50, B01D 53/34

(54) **Verfahren und Vorrichtung zur Bestimmung des CaCO3-Gehaltes einer Waschflüssigkeit**
Method and device for the determination of the CaCO3 content in a wash liquid
Procédé et dispositif pour la détermination du contenu en CaCO3 d'une solution de lavage

(43) Veröffentlichungstag der Anmeldung: 13.09.2006
(73) Patentinhaber: AE & E Lentjes GmbH, 40880 Ratingen (DE)
(72) Erfinder: Westerwich, Helmut, 45899 Gelsenkirchen (DE); Kraus, Manfred, 44892 Bochum (DE); Biernatzki, Johannes, 45896 Gelsenkirchen (DE)
(74) Vertreter: Stenger, Watzke & Ring

(56) Entgegenhaltungen:
- DE-A1- 3 429 952
- DE-A1- 3 809 379
- DE-C1- 19 733 284
- US-A- 3 950 137
- US-A- 4 329 649
- PATENT ABSTRACTS OF JAPAN Bd. 1997, Nr. 08, 29. August 1997 (1997-08-29) & JP 09 101296 A (BABCOCK HITACHI KK), 15. April 1997 (1997-04-15)

## Beschreibung

Die vorliegende Erfindung bezieht sich auf ein Verfahren zur Bestimmung des CaCO₃-Gehaltes einer einem Waschflüssigkeitskreislauf eines Waschturms entnommenen Waschflüssigkeit.

Waschtürme der zuvor genannten Art dienen zur Rauchgasreinigung, beispielsweise zur Reinigung von Rauchgasen eines Kohlekraftwerkes oder dergleichen. Sie umfassen normalerweise einen Waschturm mit Waschflüssigkeitsdüsen, die häufig in mehreren Ebenen angeordnet sind, einen Waschflüssigkeitssumpf, in dem Waschflüssigkeit gesammelt wird, und einen Absorptionsbereich, der sich in einem zylindrischen Behälterabschnitt des Waschturms vom Waschflüssigkeitssumpf bis zur oberen Waschflüssigkeitsdüsenebene erstreckt. Rauchgas wird in einen unteren Abschnitt des Absorptionsbereiches in den Waschturm eingeleitet, strömt von dort aufwärts und verläßt den Waschturm durch eine oberhalb der Waschflüssigkeitsdüsen vorgesehene Austrittsöffnung. Auf seinem Weg durch den Waschturm kommt das Rauchgas mit aus den Waschflüssigkeitsdüsen austretender Waschflüssigkeit in Kontakt und wird gereinigt, was nachfolgend näher beschrieben ist.

Die Waschflüssigkeit umfaßt neben Wasser vorzugsweise Erdalkalien, die mit den im Rauchgas vorhandenen Schwefeloxiden und mit dem im Waschturm erzeugten Schwefeloxiden reagieren. Es wird insbesondere Kalk in Form von Kalziumoxid, Kalziumhydroxid, Kalziumkarbonat oder dergleichen verwendet.

Die Erdalkalien reagieren mit den in dem Rauchgas vorhandenen Schwefeloxiden im wesentlichen zu Kalziumsulfit, das in der Waschflüssigkeit gebunden wird. Das Rauchgas wird auf diese Weise von den unerwünschten Schwefeloxiden gereinigt und tritt anschließend aus der Reinigungsvorrichtung aus. Die Waschflüssigkeit hingegen gelangt zusammen mit den in dieser schwebend gehaltenen Kalziumsulfitteilchen in den Waschflüssigkeitssumpf und wird dort gesammelt.

Kalziumsulfat, das bei der Rauchgasentschwefelung gebildet wird, weist ähnlich vorteilhafte Eigenschaften wie Naturgips auf. Somit handelt es sich hierbei um ein erwünschtes Nebenprodukt des Rauchgasreinigungsverfahrens, das aus der im Waschflüssigkeitssumpf gesammelten Waschflüssigkeit gewonnen wird. Die Kalziumsulfatteilchen werden zusammen mit der Waschflüssigkeit dem Waschflüssigkeitssumpf entnommen und dieser in einem sich anschließenden Verfahren entzogen. Das Kalziumsulfat kann zu verschiedenen Werkstoffen weiterverarbeitet werden, insbesondere zu Bauwerkstoffen.

Bei der Gewinnung von Kalziumsulfat guter Qualität ist darauf zu achten, daß möglichst wenig Erdalkalien in der im Waschflüssigkeitssumpf vorhandenen Waschflüssigkeit enthalten sind, wenn die Waschflüssigkeit zur Gewinnung von Kalziumsulfat dem Waschflüssigkeitssumpf entnommen wird.

Andererseits muß sichergestellt sein, daß ausreichend Erdalkalien in der Waschflüssigkeit vorhanden sind, um eine ausreichende Reaktion im Absorptionsbereich des Waschturmes hervorzurufen.

Um die genaue Konzentration der Erdalkalien in der Waschflüssigkeit festzustellen, ist es bekannt, den CaCO₃-Gehalt der Waschflüssigkeit zu bestimmen.

Die DE-A-19733284 beschreibt ein Verfahren zum Messen des CaCO₃-Gehaltes einer Waschsuspension, insbesondere aus dem Absorber einer Rauchgasreinigungsanlage, bei dem ein vorgegebener, konstanter Meßstrom im Bypass kontinuierlich einer pH-Meßeinrichtung zugeführt und der pH-Wert der Suspension gemessen wird. Dabei wird der Meßstrom in zeitlichen Abständen an einer Impfstelle vor der pH-Meßeinrichtung mit einer Säure geimpft und die durch die Säureimpfung resultierende Änderung des pH-Wertes gemessen. Der CaCO₃-Gehalt der Suspension wird anschließend aus der Differenz der pH-Meßwerte durch Vergleich mit Daten aus Referenzmessungen, die unter Berücksichtigung der Verweilzeit der Suspension für den Strömungsweg zwischen der Impfstelle und der pH-Meßeinrichtung erstellt worden sind, ermittelt. Entscheidend für die Genauigkeit des Verfahrens ist die Tatsache, daß einem vorbestimmten Suspensionsvolumen an der Impfstelle ein vorbestimmtes Säurevolumen hinzugefügt wird und die beiden Volumina auf ihrem Weg zur pH-Meßeinrichtung ausreichend durchmischt werden, so daß an der pH-Meßeinrichtung eine ordnungsgemäße Messung des pH-Wertes erfolgen kann. Insbesondere die genaue Dosierung des Suspensions- und Säurevolumenstroms ist dabei sehr aufwendig und kann leicht zu Ungenauigkeiten führen, die sich dann auch auf die Genauigkeit des gemessenen pH-Wertes auswirken. Auch eine Überwachung einer ordnungsgemäßen Dosierung ist bei diesem Verfahren nur schwer zu realisieren. Im Ergebnis weist das Verfahren einige Fehlerquellen auf, die sich negativ auf seine Zuverlässigkeit auswirken können.

Die DE-A-3809379 beschreibt ein Verfahren zur Bestimmung des Karbonatgehaltes einer in einer Rauchgasreinigungsanlage kontinuierlich zirkulierenden, teilweise gebrauchten Kalksteinsuspension zur Regelung der Zugabe von frischem Kalksteinmehl. Dabei wird der Kalksteinsuspension jeweils eine konstante Teilmenge in einer Zweigleitung entnommen, die zu Meßzwecken vom Kreislauf abgetrennt wird. Dieser Teilmenge wird dann Säure zugemischt. Schließlich wird das Volumen des entstehenden CO₂ bei konstanter Temperatur und konstantem Druck gemessen und der Wert zur Zufuhr frischen Kalksteinmehls herangezogen. Genauer gesagt wird bei diesem Verfahren die Gasmenge aus dem Druckanstieg in einer gasdichten Meßzelle und der Temperatur in der Meßzelle unter Berücksichtigung der Volumenänderung durch die Säurezugabe ermittelt und basierend auf dieser Gasmenge der Karbonatgehalt der Kalksteinsuspension bestimmt. Gegenüber der DE-A-19733284 handelt es sich hierbei also um ein alternatives Verfahren zur Bestimmung des Karbonatgehaltes

Die DE 34 29 952 beschreibt ein Verfahren zur Messung der Konzentration von CaCO₃ und CaSO₃, bei dem eine festgesetzte Menge einer Waschflüssigkeit ausgeschleust, Salzsäure zur Einstellung des pH-Wertes zugesetzt, anschließend das Waschflüssigkeits-Säure-Gemisch unter Einblasen von Luft verdampft und schließlich der CaCO₃-Gehalt aufgrund der CO₂-Konzentration in dem abgezogenen Gas, der Durchflussrate der als Probe genommenen Waschflüssigkeit und der Durchflussrate der eingeblasenen Luft berechnet wird.

Es ist eine **Aufgabe** der vorliegenden Erfindung, ein verbessertes bzw. alternatives Verfahren zur Bestimmung des CaCO₃-Gehaltes einer einem Waschflüssigkeitskreislauf eines Waschturms entnommenen Waschflüssigkeit sowie eine entsprechende Vorrichtung zu schaffen.

Diese Aufgabe wird gemäß der vorliegenden Erfindung durch ein Verfahren nach Anspruch 1 und eine Vorrichtung nach Anspruch 10 gelöst. Die Unteransprüche beziehen sich auf individuelle Ausführungsformen des erfindungsgemäßen Verfahrens bzw. der erfindungsgemäßen Vorrichtung.

Bei dem Verfahren gemäß der vorliegenden Erfindung wird zunächst ein vorbestimmtes Waschflüssigkeitsprobevolumen aus einem kontinuierlich zur Verfügung stehenden Waschflüssigkeitsvolumenstrom ausgeschleust. Das Probevolumen wird dann einer Meßzelle zugeführt, ebenso wie ein zuvor dosiertes, vorbestimmtes HCl-Volumen. Die beiden Volumina werden miteinander gemischt und reagieren anschließend über eine vorbestimmte Reaktionszeit miteinander. Schließlich wird der pH-Wert der so erzeugten Mischung gemessen und der CaCO₃-Gehalt basierend auf der Änderung des pH-Wertes bestimmt.

Gegenüber der DE-3809379 handelt es sich bei dem erfindungsgemäßen Verfahren um ein alternatives Verfahren zur Bestimmung des CaCO₃-Gehaltes, bei dem nicht das Volumen des entstehenden CO₂ bei konstanter Temperatur und konstanten Druck gemessen, sondern der pH-Wert der in der Meßzelle vorhandenen Waschflüssigkeit-HCI-Mischung erfaßt wird.

Im Gegensatz zur DE-A-19733284 werden Waschflüssigkeit und Säure gemäß der vorliegenden Erfindung nicht in einer Leitung gemischt und anschließend der pH-Wert gemessen, sondern es wird ein vorbestimmtes Waschflüssigkeitsprobevolumen aus einem kontinuierlich zur Verfügung stehenden Waschflüsssigkeitsvolumenstrom ausgeschleust, einer Meßzelle zusammen mit einem dosierten, vorbestimmten HCl-Volumen zugeführt, die beiden Volumina gemischt und schließlich nach Verstreichen einer vorbestimmten Reaktionszeit der pH-Wert gemessen. Das erfindungsgemäße Verfahren weist gegenüber der DE-A-19733284 den Vorteil auf, daß sichergestellt werden kann, daß sowohl das Waschflüssigkeitsprobevolumen als auch das HCl-Volumen genau dosierbar sind. Auch kann eine ordnungsgemäße Durchmischung beider Volumina gewährleistet werden. Entsprechend weist der mit Hilfe des erfindungsgemäßen Verfahrens ermittelte pH-Wert eine höhere Genauigkeit auf. Ferner können beispielsweise der Waschflüssigkeitsvolumenstrom, das Probevolumen in der Meßzelle und das dosierte HCI-Volumen mit einfachen Mitteln überwacht und somit die Plausibilität der mittels des Verfahrens durchgeführten pH-Messung überprüft werden, wenn dies erwünscht ist.

Gemäß einer bevorzugten Verfahrensvariante der vorliegenden Erfindung erfolgt das Ausschleusen des vorbestimmten Waschflüssigkeitsprobevolumens mittels einer Probenahmefalle, die mit verhältnismäßig einfachen Mitteln realisierbar ist, und die Erfassung des CaCO₃-Gehaltes mittels einer pH-Sonde.

Bei dem Waschflüssigkeitsvolumenstrom, aus dem das vorbestimmte Waschflüssigkeitsvolumen ausgeschleust wird, handelt es sich vorzugsweise um einen separat erzeugten Waschflüssigkeitsvolumenstrom. Das bedeutet, daß beispielsweise mit Hilfe einer Ringleitung ein gesonderter Waschflüssigkeitskreislauf und somit Waschflüssigkeitsvolumenstrom erzeugt wird, der ausschließlich für die Messung des pH-Wertes verwendet wird. Dies hat den Vorteil, daß der Betrieb der Ringleitung von fremden Vordrücken unabhängig ist, so daß über die Auslegung der Ringleitung und der in dieser vorgesehenen Pumpe ein autarker, stabiler Kreislauf gefahren werden kann. Eine solche Entnahme aus dem Absorber und der Betrieb der Ringleitung mit einer separaten Pumpe haben sich in vielen Anlagen bei der Realisierung der pH- und Dichte/Feststoffmessungen wegen ihrer Betriebssicherheit bewährt. Der Nachteil dieser Ausführungen besteht allerdings hinsichtlich der höheren Investitionskosten für die zusätzliche Ausgestaltung dieser Ringleitungen.

Es sollte klar sein, daß die Entnahme des Waschflüssigkeitsprobevolumens natürlich auch aus einer druckführenden Leitung, beispielsweise aus der Leitung, die vom Waschflüssigkeitssumpf zu den Waschflüssigkeitsdüsen führt, erfolgen kann. Eine autarke Leitung für die Durchführung der CaCO₃-Messung wird jedoch bevorzugt.

Gemäß einer weiteren vorteilhaften Ausbildung des erfindungsgemäßen Verfahrens sind das Waschflüssigkeitsprobevolumen und/oder das dosierte HCl-Volumen veränderbar.

Ferner ist vorteilhaft, wenn die für die Meßzelle verwendete Meßausrüstung regelmäßig kalibriert wird, um stets die erforderliche Genauigkeit der CaCO₃-Messung gewährleisten zu können. Die Kalibrierung erfolgt vorteilhaft durch naßanalytische Vergleichsmessungen.

Weiterhin werden zumindest Meßzelle und Probenahmefalle sowie die zugehörigen Leitungen vorteilhaft in regelmäßigen zeitlichen Abständen gereinigt, um entsprechend Feststoffablagerungen vorzubeugen.

Schließlich wird gemäß dem erfindungsgemäßen Verfahren bevorzugt, daß die Plausibilität der pH-Messung mittels Überwachung des Waschflüssigkeitsvolumenstroms, des Probevolumens in der Meßzelle und des dosierten HCI-Volumens überprüft wird, um eine ordnungsgemäße Funktionsweise des Verfahrens sicherzustellen.

Die erfindungsgemäße Vorrichtung zur Bestimmung des CaCO₃-Gehaltes einer Waschflüssigkeit umfaßt eine Ringleitung, eine mit der Ringleitung wirkverbundene Pumpe, eine in der Ringleitung vorgesehene Probenahmefalle zum Ausschleusen einer Waschflüssigkeitsprobe und einer mit der Probenahmefalle verbundene Meßzelle mit einer Meßausrüstung zur Bestimmung des pH-Wertes einer Waschflüssigkeitsprobe, wobei die Meßausrüstung eine HCl-Dosiereinrichtung und eine pH-Sonde zur Bestimmung des pH-Wertes aufweist.

Zudem sind bevorzugt eine Spüleinrichtung und/oder eine Entlüftung vorgesehen.

Die Probenahmefalle weist vorteilhaft eine Bypassleitung auf, über die die Waschflüssigkeit während des Ausschleusens des Waschflüssigkeitsprobevolumens mittels der Probenahmefalle umgeleitet wird, um den Waschflüssigkeitsvolumenstrom in der Ringleitung nicht unterbrechen zu müssen, so daß dieser kontinuierlich zur Verfügung steht.

Nachfolgend wird eine bevorzugte Ausführungsform der vorliegenden Erfindung unter Bezugnahme auf die beiliegende Zeichnung näher beschrieben, die eine schematische Ansicht einer Ausführungsform der erfindungsgemäßen Vorrichtung zur Bestimmung des CaCO₃-Gehaltes einer Waschflüssigkeit zeigt.

Die dargestellte Vorrichtung umfaßt eine Ringleitung 10, durch die mit Hilfe einer Pumpe 12 Waschflüssigkeit aus einem Waschflüssigkeitssumpf 14 eines in der Zeichnung nur teilweise dargestellten Waschturms 16 gepumpt wird. Dabei wird die dem Waschflüssigkeitssumpf 14 entnommene Waschflüssigkeit nach Durchströmen der Ringleitung 10 in den Waschflüssigkeitssumpf 14 zurückgeleitet, wie es durch die Pfeile A und B angedeutet ist. Die Ringleitung 10 umfaßt ferner Absperrventile 18 und 20, die wahlweise ein Durchlassen von Waschflüssigkeit ermöglichen oder verhindern.

Hinter der Pumpe 12 ist in der Ringleitung eine Probenahmefalle 22 angeordnet, mit der ein vorbestimmtes Waschflüssigkeitsprobevolumen aus der Ringleitung 10 ausschleusbar ist. Die Probenahmefalle 22 ist über eine Leitung 24 mit einer Meßzelle 26 verbunden, der ein in der Probenahmefalle 22 ausgeschleustes Waschflüssigkeitsprobevolumen zugeführt werden kann. Ferner kann über die Leitung 28, die über das Absperrventil 28a geöffnet und geschlossen werden kann, eine Zugabe eines HCI-Volumens in die Meßzelle 26 erfolgen, wobei die HCI-Säure einem HCI-Vorratsbehälter 30 entnommen und das der Meßzelle zuzuführende HCI-Volumen in einer Dosiereinrichtung 32 dosiert wird. Die Meßzelle 26 umfaßt weiterhin ein mit einem Motor 34 betriebenes Rührwerk 36, mit dessen Hilfe die der Meßzelle 26 zugeführten Waschflüssigkeits- und HCl-Volumina gemischt werden können. Nach Durchmischung der beiden Volumina kann der pH-Wert der Mischung mit Hilfe einer pH-Sonde 38 bestimmt werden. Durch Öffnen eines in einer Leitung 40 vorgesehenen Absperrventils 42 kann die Mischung nach Bestimmung ihres pH-Wertes aus der Meßzelle abgelassen werden.

Zur Umgehung der Probenahmefalle 22 umfaßt die Ringleitung 10 eine Bypassleitung 44 mit einem Absperrventil 46.

Zum Reinigen der Ringleitung 10 ist ferner eine Spülwasserleitung 48 mit einem Absperrventil 50 vorgesehen. Wird das Ventil 50 geöffnet, so kann Spülwasser in Richtung der Pumpe 12 in die Ringleitung 10 eintreten.

Schließlich ist an der Probenahme 22 ein Anschlußstück 52 angeordnet, das drei Zuläufe mit entsprechenden Absperrventilen 52a, 52b und 52c umfaßt. Durch Öffnen der entsprechenden Absperrventile 52a oder 52b kann wahlweise über die Leitung 54 Spülwasser oder über die Leitung 56 Druckluft in das Anschlußstück 52 und bei geöffnetem Absperrventil 22b entsprechend in die Probenahmefalle 22 geleitet werden. Durch Öffnen des Absperrventils 52c kann eine Entlüftung über die Leitung 58 erfolgen. Eine entsprechende Entlüftungsleitung 60 mit Absperrventil 62 und einer Spülwassereintrittsleitung 64 mit Absperrventil 66 sind mit der Meßzelle 26 verbunden.

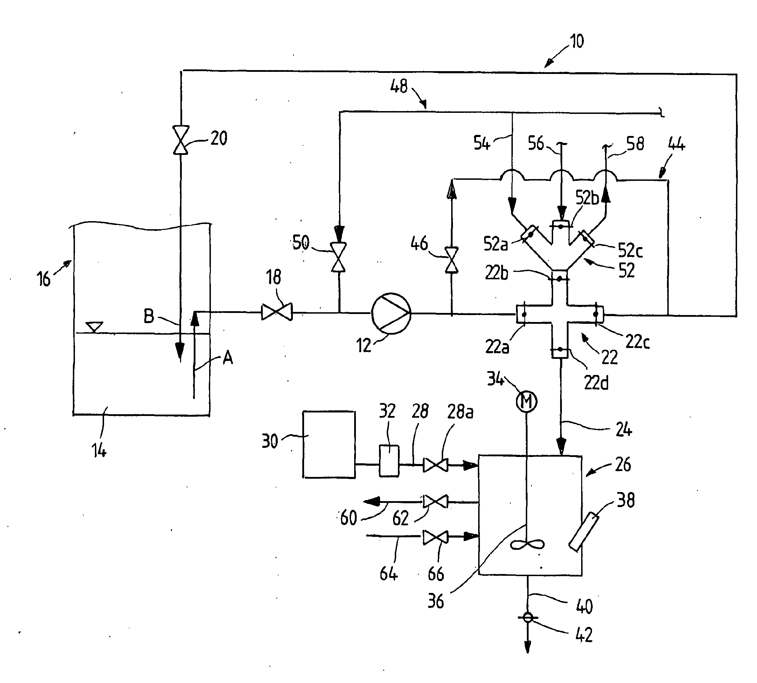

Nachfolgend wird der Betrieb der in Fig. 1 dargestellten Vorrichtung genauer beschrieben.

In der Ausgangsstellung sind sämtliche Ventile 18, 20, 22a bis 22d, 42, 46, 50, 52a bis 52c, 62 und 66 geschlossen. Zur Inbetriebnahme der dargestellten Vorrichtung werden die Absperrventile 18, 20, 22a und 22c geöffnet und die Pumpe 12 eingeschaltet. Dann wird Waschflüssigkeit aus dem Waschflüssigkeitssumpf 14 des Waschturms 16 mit Hilfe der Pumpe 12 in die Ringleitung 10 durch die Probenahmefalle 22 zurück in den Waschflüssigkeitssumpf 14 gepumpt.

Soll nun mit Hilfe der Probenahmefalle 22 ein vorbestimmtes Waschflüssigkeitsvolumen aus der Ringleitung 10 ausgeschleust werden, so wird zunächst das Absperrventil 22c der Probenahmefalle 22 geschlossen.

Auf diese Weise wird in der Probenahmefalle 22 ein vorbestimmtes Waschflüssigkeitsvolumen gestaut und durch Schließen des Absperrventils 22a der Probenahmefalle 22 in dieser eingeschlossen. Mit Schließen des Absperrventils 22a der Probenahmefalle 22 wird zeitgleich das Absperrventil 46 der Bypassleitung 44 geöffnet, so daß die Waschflüssigkeit nicht länger durch die Probenahmefalle 22 sondern durch die Bypassleitung 44 zurück in den Waschflüssigkeitssumpf 14 strömt. Das in der Probenahmefalle 22 enthaltene vorbestimmte Waschflüssigkeitsvolumen wird durch Öffnen des Absperrventils 22d und 52c der Probenahmefalle 22 durch die Leitung 24 in die Meßzelle 26 geleitet. Ein auf das in die Meßzelle 26 geleitetes Waschflüssigkeitsvolumen abgestimmtes HCl-Volumen wird in der Dosiereinrichtung 32 dosiert und durch Öffnen des Absperrventils 28a über die Leitung 28 in die Meßzelle 26 geleitet. Das mit Hilfe des Motors 34 angetriebene Rührwerk 36 mischt das Waschflüssigkeitsvolumen mit dem HCl-Volumen in der Meßzelle 26. Nach Abwarten einer vorbestimmten Reaktionszeit wird dann mit Hilfe der pH-Sonde 38 der pH-Wert der in der Meßzelle 26 vorhandenen Mischung ermittelt. Sobald der pH-Wert erfaßt wurde, kann die Mischung durch Öffnen des Absperrventils 42 durch die Leitung 40 abgelassen werden.

Zur Entnahme der nächsten Probe mit Hilfe der Probenahmefalle 22 müssen die Absperrventile 22d und 46 wieder geschlossen und das Absperrventil 22a geöffnet werden, so daß erneut Waschflüssigkeit in die Probenahmefalle strömt.

Sollen die Ringleitung 10 und die Bypassleitung 44 gereinigt werden, so müssen die Ventile 22a und 22c der Probenahmefalle 22 geschlossen und das Ventil 46 geöffnet werden. Sodann kann Spülwasser durch die Spülwasserleitung 48 durch die entsprechenden Bauteile strömen und anschließend durch das geöffnete Absperrventil 20 in den Waschturm 16 zurückfließen. Ebenso ist es möglich, bei geschlossenen Ventilen 46, 22b und 22b sowie geöffneten Ventilen 50, 22a, 22c und 20 die Probenahmefalle 22 samt deren Anschlußleitungen und die Ringleitung 10 zu spülen.

Für die alleinige Reinigung der Probenahmefalle 22 müssen deren Ventile 22a und 22c geschlossen und 22b und 22d geöffnet sein. Durch Öffnung des Ventils 52a kann Spülwasser aus der Leitung 54 durch das Anschlußstück 52 in die Probenanhmefalle 22 strömen und diese spülen. Von dort fließt es durch die Leitung 24 in die Messzelle 26, danach fließt es durch Öffnung des Absperrventils 42 durch Leitung 40 ab.

Die Messzelle selber kann durch Öffnen des Ventils 66 durch die Leitung 64 mit Spülwasser gefüllt werden. Nach der Spülung fließt das Wasser ebenfalls durch Ventil 42 und Leitung 40 ab.

Es sollte klar sein, daß die dargestellte erfindungsgemäße Vorrichtung nur als Beispiel dient und das weitere Modifikationen und Änderungen möglich sind, ohne den in den beiliegenden Ansprüchen definierten Schutzbereich der vorliegenden Erfindung zu verlassen.

### Bezugszeichenliste:

- 10: Ringleitung
- 12: Pumpe
- 14: Waschflüssigkeitssumpf
- 16: Waschturm
- 18: Absperrventil
- 20: Absperrventil
- 22: Probenahmefalle
- 22a bis 22d: Absperrventil
- 24: Leitung
- 26: Meßzelle
- 28: Leitung
- 28a: Absperrventil
- 30: HCI-Vorratsbehälter
- 32: Dosiereinrichtung
- 34: Motor
- 36: Rührwerk
- 38: pH-Sonde
- 40: Leitung
- 42: Absperrventil
- 44: Bypassleitung
- 46: Absperrventil
- 48: Spülwasserleitung
- 50: Absperrventil
- 52: Anschlußstück
- 52a bis 52c: Absperrventil
- 54: Leitung
- 56: Leitung
- 58: Leitung
- 60: Entlüftungsleitung
- 62: Absperrventil
- 64: Spülwasseraustrittsleitung
- 66: Absperrventil

## Patentansprüche

1. Verfahren zur Bestimmung des CaCO₃-Gehaltes einer einem Waschflüssigkeitskreislauf eines Waschturms (16) entnommenen Waschflüssigkeit, das die Schritte aufweist:
- Ausschleusen eines vorbestimmten Waschflüssigkeitsprobevolumens aus einem kontinuierlich zur Verfügung stehenden Waschflüssigkeitsvolumenstrom,
- Zufuhr des Waschflüssigkeitsprobevolumens in eine Meßzelle (26),
- Dosierung und Zufuhr eines vorbestimmten HCl-Volumens in die Meßzelle,
- Mischen der zugeführten Volumina,
- Abwarten einer vorbestimmten Reaktionszeit,
- Messen des pH-Wertes und
- Erfassen des CaCO₃-Gehaltes des Probevolumens basierend auf der Änderung des gemessenen pH-Werts.

2. Verfahren nach Anspruch 1, bei dem das Ausschleusen mittels einer Probenahmefalle (22) erfolgt.

3. Verfahren nach Anspruch 1 oder 2, bei dem die Erfassung des CaCO₃-Gehaltes mittels einer pH-Sonde (38) erfolgt.

4. Verfahren nach einem der vorhergehenden Ansprüche, bei dem für die Bestimmung des CaCO₃-Gehaltes ein separater, kontinuierlich zur Verfügung stehender Waschflüssigkeitsvolumenstrom erzeugt wird.

5. Verfahren nach einem der vorhergehenden Ansprüche, bei dem das Waschflüssigkeitsprobevolumen und/oder das dosierte HCI-Volumen veränderbar sind.

6. Verfahren nach einem der vorhergehenden Ansprüche, bei dem die für die Meßzelle verwendete Meßausrüstung regelmäßig kalibriert wird.

7. Verfahren nach Anspruch 6, bei dem die Kalibrierung durch naßanalytische Vergleichsmessungen erfolgt.

8. Verfahren nach einem der vorhergehenden Ansprüche, bei dem zumindest Meßzelle und Probenahmefalle in regelmäßigen zeitlichen Abständen gereinigt werden.

9. Verfahren nach einem der vorhergehenden Ansprüche, bei dem die Plausibilität der pH-Messung mittels Überwachung des Waschflüssigkeitsvolumenstroms, des Probevolumens in der Meßzelle und des dosierten HCI-Volumens überprüft wird.

10. Vorrichtung zur Bestimmung des CaCO₃-Gehaltes einer Waschflüssigkeit, die aufweist:
- eine Ringleitung (10),
- eine mit der Ringleitung wirkverbundene Pumpe (12),
- eine in der Ringleitung vorgesehene Probenahmefalle (22) zum Ausschleusen einer Waschflüssigkeitsprobe und
- eine mit der Probenahmefalle verbundene Meßzelle (26) mit einer Meßausrüstung zur Bestimmung des pH-Wertes einer Waschflüssigkeitsprobe, wobei die Meßausrüstung eine HCl-Dosiereinrichtung (32) und eine pH-Sonde (38) aufweist.

11. Vorrichtung nach Anspruch 10, die ferner eine Spüleinrichtung umfaßt.

12. Vorrichtung nach einem der Ansprüche 10 bis 11, die ferner eine Entlüftung (58) aufweist.

13. Vorrichtung nach einem der Ansprüche 10 bis 12, wobei die Probenahmefalle eine Bypassleitung (44) aufweist.

## Claims

1. A method of determining the CaCO₃ content of a washing liquid removed from a washing liquid circuit of a scrubbing tower (16), which includes the steps:
discharging a predetermined sample volume of the washing liquid from a continuously available flow of washing liquid,
supplying the sample volume of washing liquid into a measuring cell (26),
metering and supplying a predetermined volume of HCl into the measuring cell,
mixing the supplied volumes,
waiting for a predetermined reaction time,
measuring the pH value, and
determining the CaCO₃ content of the sample volume based on the change in the measured pH value.

2. A method as claimed in claim 1, in which the discharge is effected by means of a sample removal trap (22).

3. A method as claimed in claim 1 or 2, in which the determination of the CaCO₃ content is effected by means of a pH probe (38).

4. A method as claimed in one of the preceding claims, in which a separate, continuously available flow of washing liquid is produced for the determination of the CaCO₃ content.

5. A method as claimed in one of the preceding claims, in which the volume of the washing liquid sample and/or the metered HCl volume are changeable.

6. A method as claimed in one of the preceding claims, in which the measuring equipment used for the measuring cell is regularly calibrated.

7. A method as claimed in claim 6, in which the calibration is effected by wet analytical comparative measurements.

8. A method as claimed in one of the preceding claims, in which at least the measuring cell and the sample removal trap are cleaned at regular time intervals.

9. A method as claimed in one of the preceding claims, in which the plausibility of the pH measurement is checked by monitoring the flow of washing liquid, the sample volume in the measuring cell and the metered HCl volume.

10. Apparatus for determining the CaCO₃ content of a washing liquid, which includes:
an annular conduit (10),
a pump (12) operatively connected to the annular conduit,
a sample removal trap (23) provided in the annular conduit for discharging a washing liquid sample, and
a measuring cell (26), which is connected to the sample removal trap, with measuring equipment for determining the pH value of a washing liquid sample, wherein the measuring equipment includes an HCl metering device (32) and a pH probe (38).

11. Apparatus as claimed in claim 10 which further includes a flushing device.

12. Apparatus as claimed in one of claims 10 to 11, which further includes a vent (58).

13. Apparatus as claimed in one of claims 10 to 12, wherein the sample removal trap includes a bypass line (44).

## Revendications

1. Procédé pour déterminer la teneur en CaCO₃ d'un liquide de lavage retiré d'un circuit de liquide de lavage d'une tour de lavage (16), présentant les étapes suivantes :
- extraction d'un volume d'échantillon de liquide de lavage dans un flux volumétrique de liquide de lavage disponible en continu,
- acheminement du volume d'échantillon de liquide de lavage dans une cellule de mesure (26),
- dosage et ajout d'un volume prédéterminé de HCl dans la cellule de mesure,
- mélange des volumes amenés,
- attente pendant un temps de réaction prédéterminé,
- mesure du pH et
- détermination de la teneur en CaCO₃ du volume d'échantillon sur la base du changement du pH mesuré.

2. Procédé selon la revendication 1, dans lequel l'extraction est réalisée au moyen d'un piège d'échantillonnage (22).

3. Procédé selon la revendication 1 ou 2, dans lequel la détermination de la teneur en CaCO₃ est réalisée au moyen d'une sonde de pH (38).

4. Procédé selon l'une des revendications précédentes, dans lequel est produit, en vue de la détermination de la teneur en CaCO₃, un flux volumétrique de liquide de lavage séparé disponible en continu.

5. Procédé selon l'une des revendications précédentes, dans lequel le volume d'échantillon de liquide de lavage et/ou le volume de HCl dosé sont modifiables.

6. Procédé selon l'une des revendications précédentes, dans lequel l'équipement de mesure utilisé pour la cellule de mesure est régulièrement étalonné.

7. Procédé selon la revendication 6, dans lequel l'étalonnage est réalisé par des mesures comparatives d'analyse par voie humide.

8. Procédé selon l'une des revendications précédentes, dans lequel au moins la cellule de mesure et le piège d'échantillonnage sont nettoyés à intervalles de temps réguliers.

9. Procédé selon l'une des revendications précédentes, dans lequel la plausibilité de la mesure du pH est contrôlée au moyen de la surveillance du flux volumétrique de liquide de lavage, du volume d'échantillon dans la cellule de mesure et du volume de HCl dosé.

10. Dispositif pour la détermination de la teneur en CaCO₃ d'un liquide de lavage, comprenant :
- une conduite annulaire (10),
- une pompe (12) en liaison active avec la conduite annulaire,
- un piège d'échantillonnage (22) prévu dans la conduite annulaire pour l'extraction d'un échantillon de liquide de lavage, et
- une cellule de mesure (26) reliée au piège d'échantillonnage avec un équipement de mesure pour la détermination du pH d'un échantillon de liquide de lavage, lequel équipement de mesure comprend un dispositif de dosage du HCl (32) et une sonde de pH (38).

11. Dispositif selon la revendication 10, comprenant en outre une installation de rinçage.

12. Dispositif selon l'une des revendications 10 à 11, comprenant en outre une purge d'air (58).

13. Dispositif selon l'une des revendications 10 à 12, dans lequel le piège d'échantillonnage comprend une conduite de dérivation (44).
